Europäisches Patentamt

European Patent Office

Office européen des brevets

(11) Veröffentlichungsnummer: **0 022 149**
**A1**

## (12) EUROPÄISCHE PATENTANMELDUNG

(21) Anmeldenummer: **80101946.4**

(22) Anmeldetag: **11.04.80**

(51) Int. Cl.³: **H 01 H 37/60**

(30) Priorität: **06.07.79 DE 2927292**

(43) Veröffentlichungstag der Anmeldung:
**14.01.81 Patentblatt 81/2**

(84) Benannte Vertragsstaaten:
**AT BE CH DE FR GB IT LI NL SE**

(71) Anmelder: **Eugen Jäger GmbH**
**Auf dem Berg 31**
**D-7156 Wüstenrot 1(DE)**

(72) Erfinder: **Jäger, Wolfgang**
**Auf dem Berg 29**
**D-7156 Wüstenrot-Finsterrot(DE)**

(74) Vertreter: **Hoeger, Stellrecht & Partner**
**Uhlandstrasse 14c**
**D-7000 Stuttgart 1(DE)**

(54) **Temperaturregler für Aquarienheizer.**

(57) Zur Vereinfachung der Konstruktion und zur Erhöhung der Schaltgenauigkeit wird bei einem Temperaturregler für Aquarienheizer mit einem Reglergehäuse, einem an diesem befestigten ersten Kontakt sowie einem zweiten Kontakt, der aufgrund der temperaturabhängigen Bewegung eines am Reglergehäuse gehaltenen Bi-Metallstreifens zwischen einer Schließstellung, in welcher er am ersten Kontakt anliegt, und einer Offenstellung, in welcher er vom ersten Kontakt entfernt ist, bewegbar ist, vorgeschlagen, daß der zweite Kontakt (40) am freien Ende einer einseitig am Reglergehäuse (12) befestigten Blattfeder (36) angeordnet ist, die über eine labile Mittellage von einer ersten stabilen Lage, in welcher die Kontakte (33,40) aneinander liegen, in eine zweite stabile Lage, in welcher die Kontakte (33, 40) getrennt sind und die Blattfeder (36) an einem Anschlag (46) am Reglergehäuse (12) anliegt, verschiebbar ist und daß der Bi-Metallstreifen (21) an der Blattfeder (36) anliegt und diese temperaturabhängig von einer stabilen Lage in die andere verschiebt.

./...

Croydon Printing Company Ltd.

Fig.2

## Beschreibung

### Temperaturregler für Aquarienheizer

Die Erfindung betrifft einen Temperaturregler für Aquarienheizer mit einem Reglergehäuse, einem an diesem befestigten ersten Kontakt sowie einem zweiten Kontakt, der aufgrund der temperaturabhängigen Bewegung eines am Reglergehäuse gehaltenen Bimetallstreifens zwischen einer Schließstellung, in welcher er am ersten Kontakt anliegt, und einer Offenstellung, in welcher er vom ersten Kontakt entfernt ist, bewegbar ist.

In Aquarienheizern wird eine elektrische Heizung durch einen temperaturabhängigen Schalter je nach der gewünschten Temperatur ein- bzw. ausgeschaltet. Es ist bekannt, als Schaltelement einen an einem Reglergehäuse befestigten Bimetallstreifen zu verwenden, der sich je nach der Umgebungstemperatur mehr oder weniger biegt. Das freie Ende des Bimetallstreifens ist bei einer solchen bekannten Ausbildung mit einem Kontakt versehen, der im Einschaltzustand einen zweiten, am Reglergehäuse angeordneten Kontakt berührt. Um bei einer Temperatur, die in der Nähe der Schalttemperatur des Bimetallstreifens liegt, eine stabile Einschaltlage zu erreichen, ist am Reglergehäuse ein Magnet vorgesehen, der den Bimetallstreifen in seiner Einschaltstellung festhält bzw. die Bimetallfeder (Bimetallstreifen) ruckartig anzieht. Auch bei kleinen Schwankungen der Temperatur im Bereich der Schalttemperatur oder bei mechanischen Erschütterungen bleibt der Bimetallstreifen dadurch stabil in Einschaltstellung; erst bei einer größeren mechanischen Spannung des Bimetallstreifens wird dessen freies Ende von den Kontakten und dem Magnet abgehoben (DE-Gbm 7 343 988).

Diese Konstruktion erfüllt zwar die ihr zugedachte Aufgabe, jedoch ist die Herstellung einer solchen Reglerschaltung aufwendig; außerdem müssen für die Magnete hochwertige Materialien verwendet werden, so daß Reglerschaltungen dieser Bauart teuer sind. Auch das Einstellen des Kontaktdruckes durch den Abstand vom Bimetall zum Magnet erhöht den Herstellungsaufwand zusätzlich.

Der Erfindung liegt die Aufgabe zugrunde, eine Reglerschaltung speziell für Aquarienheizer derart zu verbessern, daß die Konstruktion vereinfacht und verbilligt wird. Außerdem soll die Schaltgenauigkeit erhöht werden.

Diese Aufgabe wird bei einem Temperaturregler der eingangs beschriebenen Art erfindungsgemäß dadurch gelöst, daß der zweite Kontakt am freien Ende einer einseitig am Reglergehäuse befestigten Blattfeder angeordnet ist, die über eine labile Mittellage von einer ersten stabilen Lage, in welcher die Kontakte aneinanderliegen, in eine zweite stabile Lage, in welcher die Kontakte getrennt sind und die Blattfeder an einem Anschlag am Reglergehäuse anliegt, verschiebbar ist, und daß der Bimetallstreifen an der Blattfeder anliegt und diese temperaturabhängig von einer stabilen Lage in die andere ruckartig verschiebt.

Es hat sich herausgestellt, daß durch die Verwendung einer bistabilen Schaltfeder die Schaltgenauigkeit im Vergleich zu herkömmlichen Schaltern, bei denen die Bimetallfeder durch starke Magneten in der Einschaltstellung gehalten worden ist, erheblich erhöht werden kann.

-3-

Bei einem bevorzugten Ausführungsbeispiel der Erfindung
ist vorgesehen, daß die Blattfeder in ihrem Bewegungsbereich zwischen der Anlage am Anschlag und der Anlage am
ersten Kontakt durch die Anlage an dem Bimetallstreifen vorgespannt ist, der im Bereich zwischen der festen Blattfedereinspannung und dem freien Blattfederende an dieser anliegt, und daß die Blattfeder am freien Ende eine federnde
Zunge trägt, deren freies Ende derart an einem gehäusefesten Anschlag anliegt, daß die Zunge unter einer Vorspannung aus der Ebene der Blattfeder herausgewölbt ist.

Vorteilhaft ist es, wenn die federnde Zunge durch eine U-
förmige Ausstanzung aus der Blattfeder gebildet ist, wobei
die Verbindung zwischen der Blattfeder und der Zunge am
freien Ende der Blattfeder erhalten bleibt.

Vorteilhaft ist es auch, wenn am Reglergehäuse ein im wesentlichen senkrecht zur Blattfederlängsrichtung verlaufender, stufiger Stift angeordnet ist, der durch den durch die
U-förmige Ausstanzung gebildeten Schlitz in der Blattfeder teilweise hindurchragt, und wenn die federnde Zunge
mit ihrem freien Ende im Bereich der Stufe an dem Stift anliegt.

Der Bimetallstreifen kann eine Ausnehmung aufweisen, durch
welche die Blattfeder hindurchgesteckt ist, und die Kanten
der Ausnehmung können schneidenförmig ausgebildet sein, so
daß sich eine im wesentlichen punktförmige Anlage des Bimetallstreifens an der Blattfeder ergibt. Dabei ist günstig,
wenn der Bimetallstreifen im wesentlichen parallel zu der
Blattfeder angeordnet ist und an seinem freien Ende einen
rechtwinklig abgebogenen Teil aufweist, der an der Blattfeder anliegt.

Der Anschlag kann ein an einer Seitenwand des Reglergehäuses angeordneter, in die Bewegungsbahn der Blattfeder ragender Stift sein.

Zur Einstellung der Schalttemperatur ist die Vorspannung des Bimetallstreifens vorzugsweise einstellbar. Vorteilhaft ist es dabei, wenn die Vorspannung des Bimetallstreifens mittels einer am Bimetallstreifen anliegenden, in einem gehäusefesten Gewinde verdrehbaren Gewindespindel einstellbar ist.

Bei einem bevorzugten Ausführungsbeispiel der Erfindung ist vorgesehen, daß die Gewindespindel wasserdicht durch einen Verschluß des Aquarienheizers geführt ist und mit einem Bedienungsknopf verbunden ist, der ein Anzeigeelement trägt, welches auf einer Skala auf dem Verschluß die Winkelstellung der Gewindespindel und damit die Schalttemperatur anzeigt.

Die nachfolgende Beschreibung bevorzugter Ausführungsformen der Erfindung dient im Zusammenhang mit der Zeichnung der näheren Erläuterung. Es zeigen:

Fig. 1 einen teilweise aufgebrochenen Aquarienheizer und

Fig. 2 eine vergrößerte Schnittansicht längs Linie 2-2 in Fig. 1.

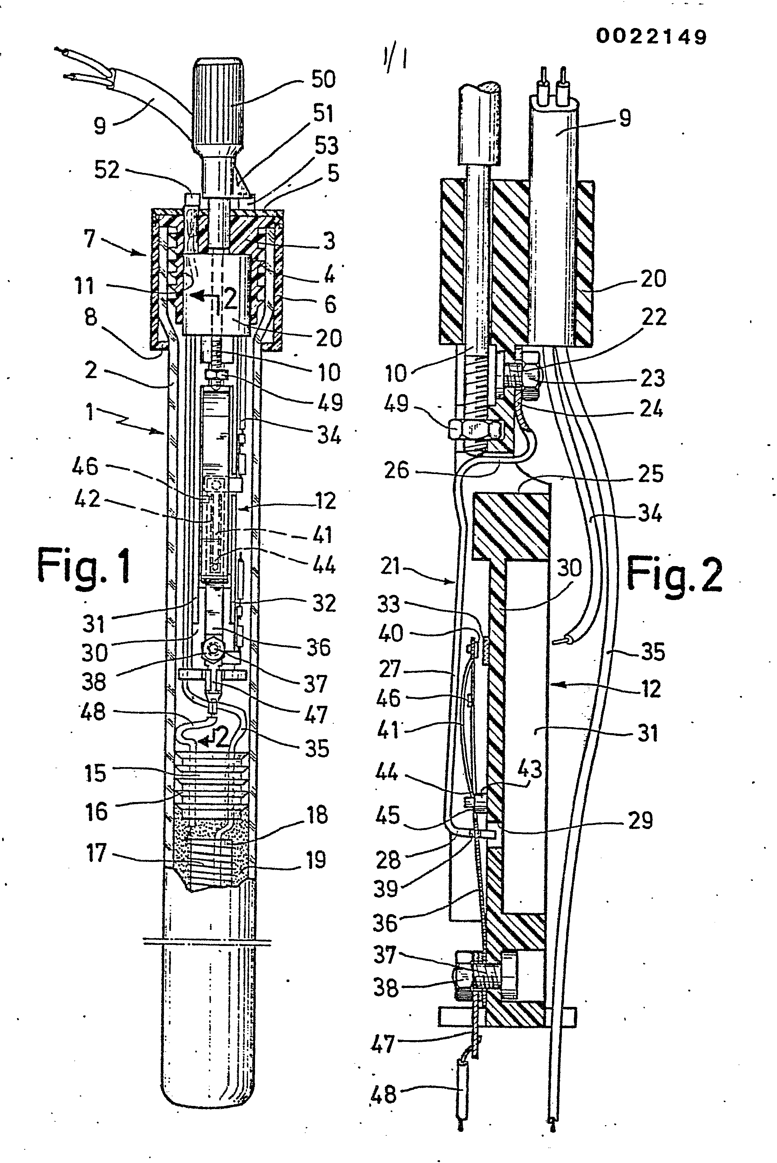

Der in Fig. 1 dargestellte Aquarienheizer 1 umfaßt ein rohrförmiges Glasgehäuse 2, das am unteren Ende abgeschlossen und am oberen Ende offen ist. Das obere Ende ist mittels eines Dichtstopfens 3 aus einem elastischen Material,

vorzugsweise aus weich eingestelltem PVC, verschlossen, welcher mittels Umfangsrippen 4 abdichtend an der Innenwand des in diesem Bereich erweiterten Glasgehäuses 2 anliegt. Dichtstopfen 3 und der erweiterte Bereich des Glasgehäuses 2 werden von einer aus einem Deckel 5 und einer Manschette 6 bestehenden Haube 7 überfangen, die sich mit ihrem unteren, nach innen gerichteten Rand 8 an dem erweiterten Bereich des Glasgehäuses 2 derart abstützt, daß ein Abziehen der Haube 7 unmöglich ist. Durch den Deckel 5 und den Dichtstopfen 3 sind eine elektrische Leitung 9 und eine Gewindespindel 10 wasserdicht hindurchgeführt.

In dem Dichtstopfen 3 ist von der Unterseite her in eine entsprechende Ausnehmung 11 ein Reglergehäuse 12 eingeschoben und dort im Preßsitz gehalten, das vorzugsweise aus einem elektrisch isolierten Kunststoffmaterial besteht.

Vom Reglergehäuse 12, dessen Aufbau weiter unten noch näher erläutert wird, führen zwei Anschlußleitungen 35 und 48 durch entsprechende Öffnungen in einem unterhalb des Reglergehäuses in das Glasgehäuse 2 eingeschobenen Dichtstopfen 15, der wieder Umfangsrippen 16 zur Abdichtung aufweist. Die Anschlußleitungen 35 und 48 sind im Raum unterhalb des Dichtstopfens 15 mit den Anschlüssen einer Heizdrahtwicklung 17 verbunden, die sich auf einem rohrförmigen Träger 18 befindet. Der freie Raum unterhalb des Dichtstopfens 15 ist mit Sand 19 gefüllt, um den Wärmeübergang zwischen der Heizdrahtwicklung einerseits und der Wand des Glasgehäuses andererseits zu verbessern.

Das Reglergehäuse 12, das im folgenden insbesondere anhand der Fig. 2 erläutert wird, trägt unterhalb des in die Aus-

-6-

nehmung 11 eingeschobenen Halteteils 20, durch den die Gewindespindel 10 und die Leitung 9 hindurchgeführt sind, an einer senkrechten Fläche einen Bimetallstreifen 21, der an dem Reglergehäuse mittels einer Schraube 22 und einer Mutter 23 befestigt ist. Von der senkrechten Einspannstelle ausgehend ist der Bimetallstreifen zweimal in entgegengesetzter Richtung rechtwinklig abgebogen, so daß sich an den senkrechten Einspannbereich 24 ein horizontaler, durch eine Öffnung 25 im Reglergehäuse erstreckender horizontaler Bereich 26 und daran anschließend ein im wesentlichen senkrecht verlaufender Bereich 27 ergeben. Am freien Ende ist der Bimetallstreifen 21 wiederum rechtwinklig abgebogen, der abgebogene Teil 28 ragt mit seinem vorderen Ende in eine Öffnung 29 in einer senkrechten Stützwand 30 des Reglergehäuses.

An dieser senkrechten Stützwand 30, an die sich links und rechts senkrecht dazu verlaufende Seitenwände 31 und 32 anschließen, ist ein erster Kontakt 33 angeordnet, der mit einer Ader 34 der durch das Halteteil 20 geführten Leitung 9 verbunden ist; diese Verbindung ist in der Zeichnung nicht dargestellt, die Ader 34 ist in Höhe des Kontaktes 33 freiendend dargestellt. Die Verbindung kann in an sich bekannter Weise durch Verlöten oder durch eine Steckverbindung hergestellt werden. Die zweite Ader 35 der Leitung 9 führt - wie oben beschrieben - am Reglergehäuse 12 vorbei zu der Heizdrahtwicklung 17.

An der vertikalen Stützwand 30 ist ferner unterhalb der Öffnung 29 eine elastische Blattfeder 36 mit einem Ende mittels einer Schraube 37 und einer Mutter 38 befestigt. Diese Blattfeder 36 ragt durch eine Öffnung 39 im horizontalen Teil 28 des Bimetallstreifens 21 hindurch und trägt an ihrem freien
Ende einen zweiten Kontakt 40, der dem ersten Kontakt 33 gegenüberliegt. Im vorderen Teil ist die Blattfeder 36 U-
förmig ausgestanzt, so daß sich eine in der Nähe des freien
Endes mit der Blattfeder verbundene federnde Zunge 41 ergibt. Am hinteren Ende des durch die Ausstanzung der Zunge
41 in der Blattfeder gebildeten Schlitzes 42 ragt ein stufenförmig ausgebildeter, an der Stützwand 30 angeformter
Stift 43 teilweise durch den Schlitz 42 hindurch; das freie
Ende 44 der federnden Zunge 41 stützt sich an der Stufe 45
dieses Stiftes 43 derart ab, daß die federnde Zunge aus der
Ebene der Blattfeder 36 herausgebogen ist. Die Stufe 45 befindet sich dabei etwa in der Ebene der Blattfeder 36.

An der Seitenwand 31 ist ein stiftförmiger Anschlag 46 vorgesehen, der in die Bewegungsbahn der Blattfeder 36 hineinragt.

Die der Stützwand 30 zugewandte Kante der Öffnung 39 liegt
im Bereich zwischen dem Ende des Schlitzes 42 und dem fest
eingespannten Ende der Blattfeder an dieser an und setzt
die Blattfeder unter Vorspannung.

Je nach Stellung des Bimetallstreifens 27 kann die Blattfeder aufgrund der eigenen Vorspannung und aufgrund der von
der federnden Zunge auf sie ausgeübten Vorspannung zwei stabile Lagen einnehmen, nämlich eine Schließlage, bei welcher
die Kontakte 33 und 40 aneinanderliegen, und eine Öffnungslage, in welcher die Kontakte voneinander getrennt sind und
die Blattfeder 36 am Anschlag 46 anliegt (die letzte Stellung ist in Fig. 2 dargestellt). Die Blattfeder bewegt sich
dabei über eine labile Lage. Um die Blattfeder von einer
stabilen Lage in die andere umschnappen zu lassen, genügt eine sehr kleine Bewegung des Bimetallstreifens, die zu einer mehr oder weniger starken Unterstützung der Blattfeder an der Anlagestelle führt.

Es ist günstig, wenn die an der Blattfeder 36 anliegende Kante der Öffnung 39 schneidenförmig ausgebildet ist, so daß der Bimetallstreifen nur punktweise an der Blattfeder anliegt.

Die Blattfeder 36 besteht aus einem federnden, elektrisch leitenden Material, beispielsweise aus Federstahl. Über eine Kontaktfahne 47, die ebenfalls mittels der Schraube 37 und der Mutter 38 am Reglergehäuse gehalten ist, ist die Blattfeder 36 mit der Leitung 48 elektrisch leitend verbunden, die zum anderen Ende der Heizdrahtwicklung 17 führt.

Die den Halteteil 20 durchdringénde Gewindespindel 10 ist in eine im Reglergehäuse unverdrehbar und in axialer Richtung unverschieblich gehaltene Mutter 49 eingeschraubt. Mit ihrem freien Ende liegt sie am horizontalen Bereich 26 des Bimetallstreifens 21 an, so daß der Bimetallstreifen durch mehr oder weniger starkes Eindrehen der Gewindespindel 10 in seiner Vorspannung veränderbar ist.

Zur Anzeige der Winkelstellung der Gewindespindel und damit zur Anzeige des Schaltzeitpunktes derselben ist ein auf das äußere Ende der Gewindespindel aufgesetzter Bedienungsknopf 50 vorgesehen, der einen zeigerähnlichen Vorsprung 51 aufweist. Dieser Vorsprung markiert auf einer aus der Zeichnung nicht ersichtlichen Skale auf dem Deckel 5 der Haube 7 die Winkelstellung des Bedienungsknopfes. Der mögliche Verdrehungsbereich der Gewindespindel wird durch zwei Anschlä-

-9-

ge 52 und 53 am Deckel 5 begrenzt.

Im Betrieb kann die Blattfeder 36 aus der in Fig. 2 dargestellten Offenstellung in die in der Zeichnung nicht dargestellte Schließstellung umschnappen, wenn der Bimetallstreifen sich bei einer Temperaturänderung so bewegt, daß
die Blattfeder vom Bimetallstreifen weniger stark unterstützt, d.h. weniger stark von der Stützwand 30 weggezogen
wird. Der Übergang erfolgt dann plötzlich, d.h. die Blattfeder schnappt von einer Stellung in die andere um. Auf diese Weise erhält man eine stabile Lage, denn das Rückschnappen erfordert wieder eine verstärkte Unterstützung der
Blattfeder durch den Bimetallstreifen. Man erzielt damit
mit der erfindungsgemäßen Anordnung den gleichen Effekt wie
mit den bekannten Magneten, die den Bimetallstreifen in der
geschlossenen Stellung gehalten haben, jedoch reagiert die
beschriebene Vorrichtung wesentlich empfindlicher auf kleine
Bewegungen des Bimetallstreifens, d.h. auf kleinere Temperaturänderungen.

Zur Regelung des Schaltzeitpunktes kann die Vorspannung der
Blattfeder durch verschieden tiefes Eindringen der Gewindespindel verändert werden.

-lo-

Patentansprüche :

1. Temperaturregler für Aquarienheizer mit einem Reglergehäuse, einem an diesem befestigten ersten Kontakt sowie
einem zweiten Kontakt, der aufgrund der temperaturabhängigen Bewegung eines am Reglergehäuse gehaltenen
Bimetallstreifens zwischen einer Schließstellung, in
welcher er am ersten Kontakt anliegt, und einer Offenstellung, in welcher er vom ersten Kontakt entfernt ist,
bewegbar ist, d a d u r c h   g e k e n n z e i c h -
n e t ,   daß der zweite Kontakt (40) am freien Ende
einer einseitig am Reglergehäuse (12) befestigten Blattfeder (36) angeordnet ist, die über eine labile Mittellage von einer ersten stabilen Lage, in welcher die Kontakte (33, 40) aneinanderliegen, in eine zweite stabile
Lage, in welcher die Kontakte (33, 40) getrennt sind
und die Blattfeder (36) an einem Anschlag (46) am Reglergehäuse (12) anliegt, verschiebbar ist und daß der Bimetallstreifen (21) an der Blattfeder (36) anliegt und
diese temperaturabhängig von einer stabilen Lage in die
andere verschiebt.

2. Temperaturregler nach Anspruch 1, dadurch gekennzeichnet, daß die Blattfeder (36) in ihrem Bewegungsbereich
zwischen der Anlage am Anschlag (46) und der Anlage am
ersten Kontakt (33) durch die Anlage an dem Bimetallstreifen (21) vorgespannt ist, der im Bereich zwischen
der festen Blattfedereinspannung und dem freien Blattfederende an dieser anliegt, und daß die Blattfeder (36)
am freien Ende eine federnde Zunge (41) trägt, deren freies Ende derart an einem gehäusefesten Anschlag (43) anliegt, daß die Zunge (41) unter einer Vorspannung aus der Ebene der Blattfeder (36) herausgewölbt ist.

3. Temperaturregler nach Anspruch 2, dadurch gekennzeichnet, daß die federnde Zunge (41) durch eine U-förmige Ausstanzung aus der Blattfeder (36) gebildet ist, wobei die Verbindung zwischen der Blattfeder (36) und der Zunge (41) am freien Ende der Blattfeder (36) erhalten bleibt.

4. Temperaturregler nach Anspruch 3, dadurch gekennzeichnet, daß am Reglergehäuse (12) ein im wesentlichen senkrecht zur Blattfederlängsrichtung verlaufender, stufiger Stift (43) angeordnet ist, der durch den durch die U-förmige Ausstanzung gebildeten Schlitz (42) in der Blattfeder (36) teilweise hindurchragt, und daß die federnde Zunge (41) mit ihrem freien Ende im Bereich der Stufe an dem Stift (43) anliegt.

5. Temperaturregler nach einem der voranstehenden Ansprüche, dadurch gekennzeichnet, daß der Bimetallstreifen (21) eine Ausnehmung (29) hat, durch welche die Blattfeder (36) hindurchgesteckt ist, und daß die Kanten der Ausnehmung (29) schneidenförmig ausgebildet sind, so daß sich eine im wesentlichen punktförmige Anlage des Bimetallstreifens (21) an der Blattfeder (36) ergibt.

6. Temperaturregler nach einem der voranstehenden Ansprüche, dadurch gekennzeichnet, daß der Bimetallstreifen (21) im wesentlichen parallel zu der Blattfeder (36) angeordnet ist und an seinem freien Ende einen rechtwinklig abgebogenen Teil (28) aufweist, der an der Blattfeder (36) anliegt.

7. Temperaturregler nach einem der Ansprüche 2 bis 6, dadurch gekennzeichnet, daß der Anschlag ein an einer Seitenwand (31) des Reglergehäuses (12) angeordneter, in die Bewegungsbahn der Blattfeder (36) ragender Stift (46) ist.

8. Temperaturregler nach einem der voranstehenden Ansprüche, dadurch gekennzeichnet, daß der Bimetallstreifen (21) in seiner Vorspannung einstellbar ist.

9. Temperaturregler nach Anspruch 8, dadurch gekennzeichnet, daß die Vorspannung des Bimetallstreifens (21) mittels einer am Bimetallstreifen (21) anliegenden, in einem gehäusefesten Gewinde (49) verdrehbaren Gewindespindel (10) einstellbar ist.

10. Temperaturregler nach Anspruch 9, dadurch gekennzeichnet, daß die Gewindespindel (10) wasserdicht durch einen Verschluß (3, 5) des Aquarienheizers (1) geführt ist und mit einem Bedienungsknopf (50) verbunden ist, der ein Anzeigeelement (51) trägt, welches auf einer Skala auf dem Verschluß (5) die Winkelstellung der Gewindespindel (10) und damit die Schalttemperatur anzeigt.

Fig.1

Fig.2

1/1

0022149

| | Europäisches Patentamt | EUROPÄISCHER RECHERCHENBERICHT | Nummer der Anmeldung EP 80 10 1946 |

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int.Cl. 3) |
|---|---|---|---|
| | FR - A - 1 036 506 (PROCEDES SAU-TER) <br><br> * Seite 1, rechte Spalte, Absätze 2-5; Seite 2, linke Spalte, Absätze 1,2 * <br><br> -- | 1,2,4, 7 | H 01 H 37/60 |
| | US - A - 2 658 975 (M. ZUCKERMAN) <br> * Spalte 2, Zeilen 25-54 * <br><br> -- | 1-3,4, 7 | |
| | DE - B - 1 200 414 (TEXAS INSTRU-MENTS) <br><br> * Spalte 3, Zeilen 11-54; Spalte 5, Zeilen 46-52 * <br><br> -- | 1,2,5-8 | RECHERCHIERTE SACHGEBIETE (Int. Cl. 3) <br><br> H 01 H 37/60 <br> 37/52 <br> 37/12 <br> A 61 K 64/00 <br> H 05 B 3/78 <br> 3/80 <br> 3/82 |
| | FR - A - 1 561 703 (K. FISCHER) <br> * Seite 5, Zeilen 38-45; Seite 6, Zeilen 1-23 * <br><br> -- | 1-4 | |
| | DE - C - 618 279 (RITTER RELEKTRO-WÄRME) <br><br> * Seite 2, Zeilen 1-10 * <br><br> -- | 1,5,8 | |
| | US - A - 3 246 210 (J.L. LORENZ) <br><br> * Spalte 4, Zeilen 3-56; Spalte 3, Zeilen 42-52 * <br><br> -- | 1,2,5-9 | KATEGORIE DER GENANNTEN DOKUMENTE <br><br> X: von besonderer Bedeutung <br> A: technologischer Hintergrund <br> O: nichtschriftliche Offenbarung <br> P: Zwischenliteratur <br> T: der Erfindung zugrunde liegende Theorien oder Grundsätze <br> E: kollidierende Anmeldung <br> D: in der Anmeldung angeführtes Dokument <br> L: aus andern Gründen angeführtes Dokument <br> &: Mitglied der gleichen Patentfamilie, übereinstimmendes Dokument |
| | US - A - 3 087 033 (G.F. DALLAS) <br> * Spalte 3, Zeilen 8-49 * <br><br> -- <br> ./. | 5-7 | |

Der vorliegende Recherchenbericht wurde für alle Patentansprüche erstellt.

| Recherchenort Den Haag | Abschlußdatum der Recherche 14-10-1980 | Prüfer LIBBERECHT |

EPA form 1503.1   06.78

# EUROPÄISCHER RECHERCHENBERICHT

Europäisches Patentamt

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der Maßgeblichen Teile | betrifft Anspruch | |
| | CH - A - 363 735 (MERLIN MOULDINGS)<br>* Seite 2, Zeilen 31-76 *<br>-- | 1-5,7 | |
| F | FR - A - 2 336 022 (LIQUIFRY COMPANY)<br>* Seite 4, Zeilen 23-40 *<br>---- | 1,8-10 | |
| | | | RECHERCHIERTE SACHGEBIETE (Int. Cl.³) |